# EUROPEAN PATENT SPECIFICATION

(11) **EP 0 254 565 B1**
(45) Date of publication and mention of the grant of the patent: **17.03.1993**
(21) Application number: 87306514.8
(22) Date of filing: 23.07.1987
(51) Int. Cl.: H04L 9/32, G06F 1/00

(54) **Methods of and apparatus for forming identification data**
Verfahren sowie Vorrichtungen zum Bilden von Identifikationsdaten
Méthodes et appareils pour former des données d'identification

(30) Priority: 24.07.1986 JP 172887/86
(43) Date of publication of application: 27.01.1988
(73) Proprietor: MEIJI MILK PRODUCTS COMPANY LIMITED, Tokyo 104 (JP)
(72) Inventor: Ohta, Junichi, Edogawa-ku Tokyo (JP)
(74) Representative: Robinson, Nigel Alexander Julian

(56) References cited:
- US-A- 3 984 668
- US-A- 4 218 738
- US-A- 4 314 097

## Description

This invention relates to methods of and apparatus for forming identification data. The identification data may be used for demonstrating the authenticity of the user of a peripheral device in making data communications with other peripheral devices or computer centres in a data in a data communication network including a plurality of peripheral devices for data communication and computer centres.

In a data communication network including a plurality of peripheral devices for data communication and a computer centre or centres, it is generally necessary to check that a user is authorized to use the network, and to cipher the data transmitted through the communication network, in order to enable only the authorized users to have access to the host machine, to assure data security such as data confidentiality.

Heretofore (see e.g. US-A-4 218 738), in checking that a user is an authorized user, identification data allocated to each user and the password optionally designated by the user are registered at a host machine. The user transmits the identification data and the password from the terminal machine to the host machine, and the identification data and the password received at the host machine are compared with the identification data and the password registered at the host machine.

For example, in a cash dispenser making use of an on-line system of banking facilities, an identification (ID) card such as a magnetic card or an integrated circuit (IC) card with pre-recorded identification data of a user is utilized to demonstrate that the user is an authorized user of a bank account. The method of identifying a person by an IC card is shown for example in Japanese laid-open patent publication 60/146361.

On the other hand, data transmitted through a communication network are protected by ciphering the data on the communication network by a ciphering device of the data encryption standard (DES) or Rivest-Shamir-Adelman (RSA) system provided on the communication network.

It is noted that, in data communication networks in general, the password optionally designated by the user may be decoded or discovered and, if the ID card is forged or stolen, it becomes impossible to identify the authorized user correctly, so that the chance that the host machine is illegally accessed is increased. On the other hand, the identification data allocated to the user are formed by a dedicated data processing device at the time of the preparation of the ID card or at a host machine of the data communication network. There is the risk of theft of the data processing device, the identification data formation algorithm at the host machine, or of the identification data per se. Thus a demand has arisen for a method and apparatus for forming identification data of high data security or confidentiality.

According to the present invention there is provided a method of forming identification data, the method being characterized by:
reading out data of a prescribed number of bits from random number data on the basis of key data, said random number data being formed of a large number of bits and previously stored in a memory;
forming new key data at least a part of which is formed by said data of a prescribed number of bits read out from the random number data;
reading out data of a prescribed number of bits from said random number data on the basis of said new key data, the read-out operation being repeatedly performed; and
forming identification data from said data of the prescribed number of bits repeatedly read out from said random number data.

According to the present invention there is also provided an apparatus for forming identification data, the apparatus being characterized by:
a memory in which random number data formed of a large number of bits are previously stored;
address forming means for forming addresses for reading out data of a prescribed number of bits from said memory on the basis of key data; and
data read-out means for transmitting said data of a prescribed number of bits read out from said memory to said address forming means as at least a part of new key data;
the identification data being formed from said data each formed of a prescribed number of bits read out from said random number data.

In embodiments of the method of and the apparatus for forming identification data and in accordance with the present invention, data of a predetermined number of bits read out on the basis of key data from data of a large number of bits previously stored in a terminal machine in a data communication network are used to form at least a portion of new key data, and the data each being of a predetermined number of bits are repeatedly read out from the aforementioned random number data of a large number of bits for forming identification data. In this manner, there are obtained identification data of extremely high data security that are unequivocally defined with respect to the key data by the algorithm for forming the identification data at the terminal machine and the algorithm for forming the key data at the host machine. On the other hand, when the identification data formed at the terminal machine from the random number data on the basis of the key data are registered at the host machine, it may be checked at the host machine that the user is an authorized user by simply having the key data proper to each terminal machine controlled or managed at the host machine. In addition, when the identification data formed from the random number data at the terminal machine on the basis of the received key data are combined into transmitted data at the host machine, the transmitted data themselves are protected, so that, in the case of leakage of the transmitted data, an authorized user may optionally duplicate the received data without the contents of the transmitted data being known by third parties.

The invention will now be described by way of example with reference to the accompanying drawings, throughout which like parts are referred to by like references, and in which:
Figure 1 is a block diagram showing a first embodiment of the present invention as applied to a data communication network;
Figure 2 is a flow chart showing the operation of the first embodiment; and
Figure 3 is a block diagram showing a second embodiment of the present invention.

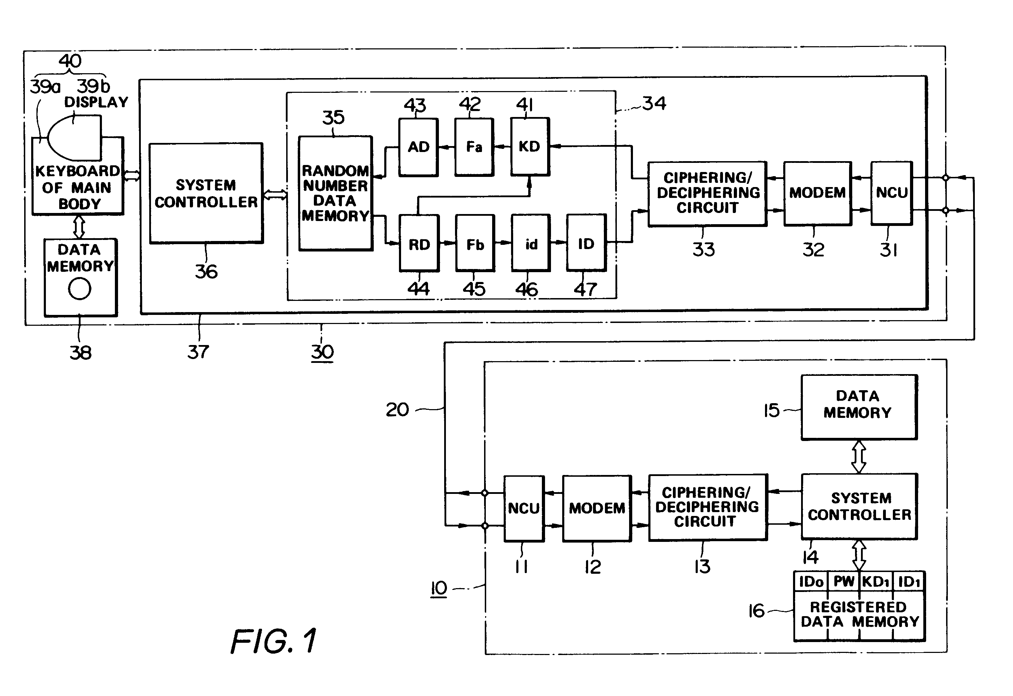

A preferred embodiment of data communication network making use of a method of and apparatus for forming identification data and according to the present invention will now be described referring first to Figure 1, which shows apparatus comprising a host machine 10 of the data communication network formed by a general network control unit (NCU) 11, a modulation/demodulation unit (MODEM) 12, a ciphering/deciphering circuit 13 or a system controller 14 necessary for supplying or receiving data to or from a plurality of terminal machines 30, a data memory 15 for storing data required by users of the data communication network, and a registered data memory 16 necessary for storing registered data necessary for identifying the terminal machine 30.

Each terminal machine 30 is formed by an NCU 31, a MODEM 32 and a ciphering/deciphering circuit 33 corresponding to those of the host machine 10, a communication adaptor 37 comprising an arithmetic operating and processing unit 34 for formation of identification data, a random number data memory 35 comprising a read-only (ROM) with previously written random number data of, for example, 32k-bytes, for forming identification data, and a system controller 36 controlling the arithmetic operating and processing unit 34 and the random number data memory 35, and a data terminal 40 comprising a data memory 38 for storage of data transmitted from the host machine 10, a keyboard 39a for inputting operating data, and a display 39b.

In this embodiment, the arithmetic operating and processing unit 34 for formation of the identification data is formed by a first register 41 for transient storage of key data KD, a first irreversible function or Fa processing unit 42 for subjecting the key data KD stored in the register 41 to irreversible function processing, reading the thus processed data and forming address data AD, a second register 43 for transient storage of read-out address data AD formed in the Fa processing unit 42, a third register 44 for transiently storing data RD read out from a storage location of the random number memory 35 designated by the address data AD stored in the register 43, a second irreversible function or Fb processing unit 45 for subjecting the data RD stored in the register 44 to irreversible function processing, a fourth register 46 for transiently storing data id formed in the Fb processing unit 45, and a transmission buffer 47 for transiently storing identification data or ID data formed in the operating and processing unit 34. It is noted herein that semiconductor random access memories (RAMs) may be used as the registers 41, 43, 44 and 46 and as the transmission buffer 47, while so-called progammable array logics (PALs) may be used as the irreversible function processing units 42 and 45, and a semiconductor ROM may be used as the random number memory 35.

In this data communication network, when making user registration for utilizing a data base, an ID number ID0 allocated to each terminal machine 30 at the host machine 10, a password PW arbitrarily designated by the user and a key data KD1 randomly produced for each ID number by the host machine 10, are registered in the register data memory 16 of the host machine 10. As the user inputs his ID number ID0 and his password PW in the terminal machine 30 and accesses the host machine 10, the identification data ID1 may be registered in the registered data memory 16 in the following manner.

That is, in registering the identification data ID1, the user operates the terminal machine 30 to transmit the ID number ID0 and the password PW to access the host machine 10. The host machine 10 acknowledges that the received ID number ID0 and the password PW coincide with the ID number ID0 and the password PW registered in the registered data memory 16 and transmits the key data KD1 allocated to each terminal machine 30 in association with the ID number ID0 to the terminal machine 30. The terminal machine 30 fetches the received key data KD1 to the operating and processing unit 34 to form identification data ID1 of a predetermined length on the basis of the key data KD1, which identification data ID1 is retransmitted to the host machine 10. The host machine 10 registers the received identification data ID1 in the registered data memory 16.

The arithmetic operating and processing unit 34 of the terminal machine 30 forms and transmits the identification data ID1 in the following manner.

On receiving the key data KD1, the arithmetic operating and processing unit 34 fetches the key data KD1 of, for example, sixteen bits, to the register 41, forms read-out address data AD in the Fa processing unit 42 using the key data KD1 as the parameter, and writes the read-out address data AD in the register 43. The unit 34 then reads out a 1-byte data RD from, for example, 32k-byte random number data previously written in the random number memory 35 at a storage location thereof designated by the read-out address data AD, and writes the read-out 1-byte data, for example, in the register 44. The unit 34 then forms a 1-byte identification data id in the Fb processing unit 45 using the data RD written in the register 44 as the parameter, and writes the formed identification data id in the register 46. The identification data id are transmitted from the register 46 to the transmission buffer 47 where they are stored. The unit 34 then moves the lower eight bits of the key data KD1 stored in the register 41 to the position of the upper eight bit positions while moving the 1-byte data RD stored in the register 44 to the register 41 as the lower eight bit data to form new key data KD. In the present embodiment, this arithmetic operation and processing is repeated 128 times, for example, using newly formed key data KD each time to form the 128-byte identification data ID1 in the transmission buffer 47, which data are transmitted from the transmission buffer 47 to the host machine 10 through the ciphering/deciphering circuit 33, the MODEM 32 and the NCU 31. The length L of the identification data ID, (in the present embodiment, it is equivalent to the number of times of repetition of the arithmetic operation) is not limited to 128 as described above and may be set optionally. Alternatively, the numerical data of the length L of the identification data or the data of the number of times of the repetitive operation in the present embodiment may be transmitted to the terminal machine 30 so that the length of the identification data ID1 will be determined in the host machine 10.

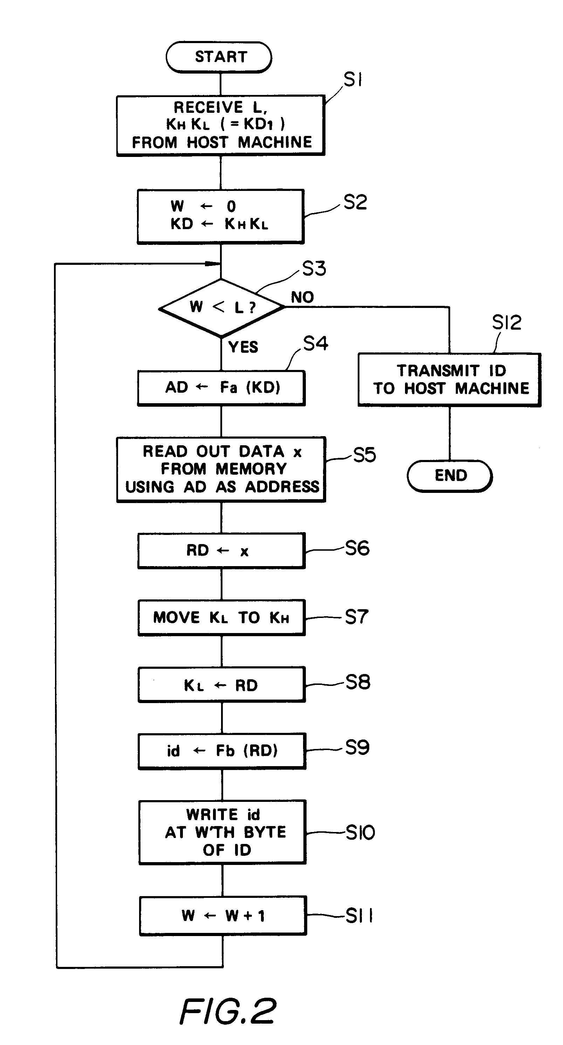

An exemplary operation of forming identification data ID1 at the terminal machine 30 will be described by referring to the flow chart of Figure 2. In this figure, it is assumed that the length L of the identification data ID1 and the key data KD1 are transmitted to the terminal machine 30, and that the key data KD1 is formed by two bytes or sixteen bits, with the upper and lower eight bits being indicated by KH and KL respectively.

At the first step S1 of Figure 2, the length L of the identification data transmitted from the host machine 10 and the key data KD1 (with the upper eight bits KH and the lower eight bits KL) are received. At the next step S2, the loop control variable W is set to 0 and the aforementioned data (KH, KL) are stored as the usual key data KD in the register 41. At the next step S3, it is determined whether the aforementioned loop control variable W is less than L. If affirmative, control proceeds to the next step S4, the key data KD in the register 41 are transmitted to the Fa processing unit 42 where they are processed to produce read-out address data AD which are written in the register 43. At the next step S5, the 1-byte data x of the 32k-byte random number data previously written in the random number memory 35 are read out at a memory location designated by the read-out address data AD. At the next step S6, the data x are written as the aforementioned data RD in the register 44. At the next step S7, the lower eight bits KL of the key data KD stored in the register 41 are moved to the position of the upper eight bits KH. At the step S8, the aforementioned 1-byte data RD stored in the register 44 are moved to the register 41 as the lower 8-bit KL data to form new key data KD. At the next step S9, the data RD written in the register 44 are transmitted to the Fb processing unit 45 where they are processed to produce 1-byte data id of the L-byte identification data, which data id are written into the register 46. At the next step S10, the 1-byte data id is written into the Wth byte in the storage area of the L-byte identification data ID provided in the transmission buffer 47. At the next step S11, the loop control variable W is incremented (W to W+1), after which control returns to step S3. After this operational sequence has been repeated L times and if then the result of decision at the step S3 is NO, control proceeds to step S12, where the L-byte identification data ID stored in the transmission buffer 47 are transmitted to the host machine 10. It is noted that the identification data associated with the aforementioned key data KD1 are indicated as ID1.

In this manner, the identification data ID1 retransmitted from the terminal machine 30 are registered at the registered data memory 16 of the host machine 10, in association with the key data KD1 allotted to the terminal machine 30. Then, each time the host machine 10 is accessed by the terminal machine 30 by the ID number ID0 and the password PW, the host machine 10 acknowledges the coincidence between these ID numbers. The host machine 10 then transmits the key data KD1, and acknowledges the coincidence between the identification data ID1 returned from the terminal machine 30 and the identification data ID1 stored in the registered data memory 16, to confirm that the user is an authorized user.

Should the key data KD1 registered at the host machine 10 be leaked to an unauthorized third party, the host machine 10 may alter the key data KD1 and generate identification data ID1 associated with new key data KD1 by using the aforementioned algorithm for generating initial identification data for re-registration of the new identification data.

In this embodiment, when the information required by the user is read out from the data memory 15 and transmitted from the host machine 10 to the terminal machine 30, the host machine 10 first generates disposable or nonce key data KD2 and transmits these data to the terminal machine 30 each time the information is transmitted. The host machine 10 then causes the arithmetic operating and processing unit 34 to form new n-byte identification data ID2 from the random number data by using the same artifice as that used for forming the identification data ID1, and then causes these data ID2 to be retransmitted to the host machine 10. The host machine 10 then reads out the information requested by the user from the data memory 15, incorporates the received identification data ID2 and the aforementioned key data KD2 into the information read-out from the data memory 15 and transmits the resulting combined data to the terminal machine 30.

The terminal machine 30 writes the received data, that is, the information into which are combined the identification data ID2 and the key data KD2, into the data memory 38. When the user uses the information written into the data memory 38, the key data KD2 combined into the information is transmitted to the arithmetic operating and processing unit 34, while the identification data ID2 generated by the aforementioned algorithm for forming the identification data and retransmitted to the data terminal 40. The data terminal 40 proceeds to compare the identification data ID2 combined into the information with the retransmitted data ID2. Unless these data are coincident with each other, the key lock remains engaged to inhibit the use of the received data. In other words, any one other than the authorized user who uses the terminal machine 30 having received the data, cannot use the received data.

It is noted that, by using floppy discs as the data memory 38, the authorized user may optionally produce a duplicate disc as a back-up on which are recorded the received data. However, the information cannot be used by any one other than the authorized user.

In the data communication network of this embodiment, the data composed of a predetermined number of bits repeatedly read out from random number data composed of a number of bits previously stored in a terminal machine on the basis of key data are used as new key data, thereby forming identification data of extremely high security unequivocally determined in accordance with different key data afforded by the host machine to the respective terminals, these identification data being user-registered at the host machine. Thus it is only necessary to control or manage the key data proper to the respective terminals to identify the authorized user securely and positively. Should key data be leaked to an unauthorized third party, it is only necessary to alter the key data of the host machine in order to provide for information security without the necessity of changing the hardware of the terminal machine. When there are a plurality of host machines, it is only necessary separately to control or manage the key data to be afforded to the terminal machines registered as the users at the host machines, in order to identify the users reliably by using the same hardware. When the same communication adaptor is used by a plurality of users, it is only necessary for the host machine to control or manage key data and identification data. In addition, since the identification data formed at the terminal machines on the basis of the key data are combined at the host machine into the data to be transmitted from the host machine, the received data per se are protected in such a manner that only the terminal machines having the aforementioned identification data formation algorithm can utilize the contents of the received data. Thus, in the case of leakage of the received data, the received data can be optionally duplicated by the authorized user without the contents thereof being known by third parties, so that there may be realized a data communication network that is most suitable for on-line delivery of the software by making use of the communication network.

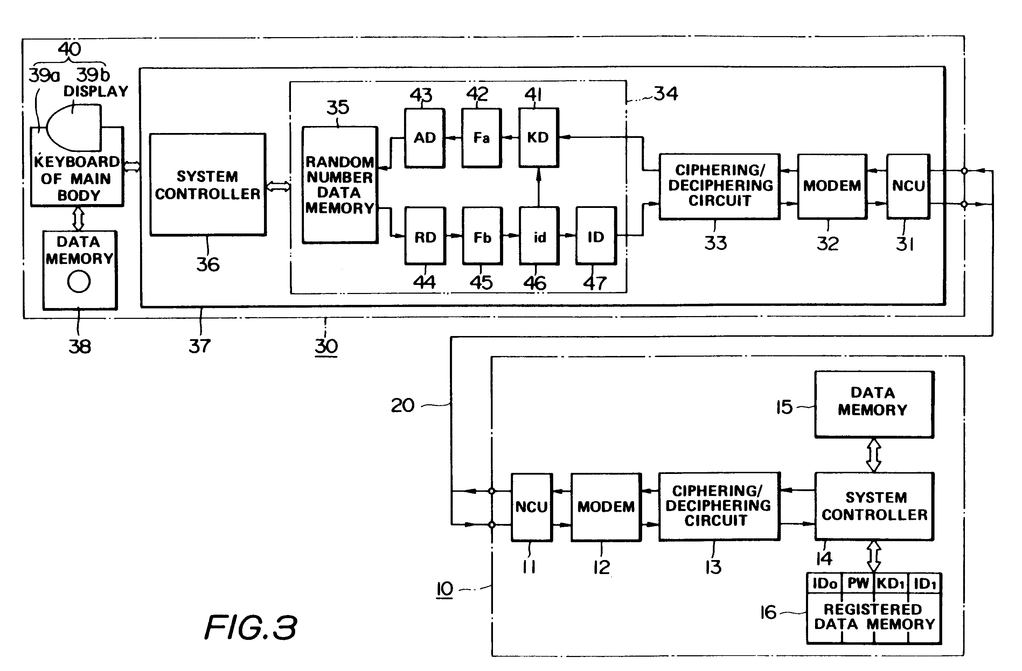

The present invention is not limited to the above described embodiment. For example, instead of the 1-byte data RD from the register 44, the 1-byte data id from the register 46 may be transmitted to the register 41 as the data of the lower eight bits KL of the new key data, as in the second embodiment shown in Figure 3. The arrangement and the operation of the second embodiment are otherwise the same as that of the above-described first embodiment. Other changes can also be made without departing from the scope of the invention. For example, the number of times of repetition of the aforementioned arithmetic operation and processing may be different from the length L of the key data KD.

## Claims

1. A method of forming identification data (ID), the method being characterized by:
reading out data (RD) of a prescribed number of bits from random number data on the basis of key data (KD), said random number data being formed of a large number of bits and previously stored in a memory (35);
forming new key data (KD) at least a part of which is formed by said data (RD) of a prescribed number of bits read out from the random number data;
reading out data (RD) of a prescribed number of bits from said random number data on the basis of said new key data (KD), the read-out operation being repeatedly performed; and
forming identification data (ID) from said data (RD) of the prescribed number of bits repeatedly read out from said random number data.

2. A method according to claim 1 further comprising subjecting said key data (KD) to irreversible function processing (Fa) to form address data (AD) for reading out said data (RD) of the prescribed number of bits from said memory (35).

3. A method according to claim 1 or claim 2 further comprising subjecting said data (RD) of a predetermined number of bits read out from said memory (35) to irreversible function processing (Fb) to form new key data (KD).

4. A method according to claim 1 further comprising sending said key data (KD) from a host machine (10) to a terminal machine (30), forming identification data (ID) at said terminal machine (30) from said random number data on the basis of said key data (KD), and retransmitting said identification data (ID) from said terminal machine (30) to said host machine (10).

5. A method according to claim 1 further comprising sending said key data (KD) from a host machine (10) to a terminal machine (30), forming identification data (ID) at said terminal machine (30) from said random number data on the basis of said key data (KD), retransmitting said identification data (ID) to said host machine (10), and incorporating said identification data (ID) at said host machine (10) into data which are transmitted.

6. A method according to claim 4 or claim 5 comprising sending the data concerning the number of times of repetition of reading out said data (RD) of a prescribed number of bits from said random number data from said host machine (10) to said terminal machine (30) and repeatedly reading out at said terminal machine (30) said data (RD) of a prescribed number of bits from said random number data stored in said memory (35) said number of times of repetition.

7. An apparatus for forming identification data, the apparatus being characterized by:
a memory (35) in which random number data formed of a large number of bits are previously stored;
address forming means (43) for forming addresses for reading out data (RD) of a prescribed number of bits from said memory (35) on the basis of key data (KD); and
data read-out means (44) for transmitting said data (RD) of a prescribed number of bits read out from said memory (35) to said address forming means (43) as at least a part of new key data (KD);
the identification data (ID) being formed from said data (RD) each formed of a prescribed number of bits read out from said random number data.

8. Apparatus according to claim 7 wherein said address forming means (43) forms the address data (AD) by subjecting said key data (KD) to irreversible function processing (42).

9. Apparatus according to claim 7 or claim 8 wherein said data read-out means (44) forms new key data (KD) by subjecting said data (RD) of a prescribed number of bits read out from said memory (35) to irreversible function processing (45).

## Patentansprüche

1. Verfahren zum Bilden von Identifikationsdaten ID, wobei das Verfahren gekennzeichnet ist durch:
Auslesen von Daten (RD) einer vorbestimmten Anzahl von Bits aus Zufallszahlendaten auf der Basis von Schlüsseldaten (KD), wobei die Zufallszahlendaten aus einer großen Anzahl von Bits gebildet und vorher in einem Speicher (35) gespeichert worden sind,
Bilden neuer Schlüsseldaten (KD), von welchen zumindest ein Teil durch die Daten (RD) der vorbeschriebenen Anzahl von Bits gebildet wird, welche aus dem Zufallszahlenspeicher ausgelesen wurden,
Auslesen von Daten (RD) einer vorbestimmten Anzahl von Bits aus den Zufallszahlendaten auf Basis der neuen Schlüsseldaten (KD), wobei die Ausleseprozedur wiederholt durchgeführt wird, und
Bilden von Identifikationsdaten (ID) aus den Daten (RD) der vorbestimmten Anzahl von Bits, die wiederholt aus den Zufallszahlendaten ausgelesen wurden.

2. Verfahren nach Anspruch 1, welches weiterhin den Schritt aufweist, daß die Schlüsseldaten (KD) einer irreversiblen Funktionsverarbeitung (Fa) ausgesetzt werden, um Adressendaten (AD) zu bilden für das Auslesen der Daten (RD) der vorbestimmten Anzahl von Bits aus dem Speicher (35).

3. Verfahren nach Anspruch 1 oder 2, welches weiterhin den Schritt aufweist, daß die Daten (RD) der vorbestimmten Anzahl von Bits, welche aus dem Speicher 35 ausgelesen wurden, einer irreversiblen Funktionsbearbeitung (Fb) ausgesetzt werden, um neue Schlüsseldaten (KD) zu bilden.

4. Verfahren nach Anspruch 1, welches weiterhin den Schritt aufweist, daß Schlüsseldaten (KD) von einer Host-Maschine (10) zu einem Terminalgerat (30) übermittelt werden, daß Identifikationsdaten (ID) an dem Terminalgerät (30) aus den Zufallszahlendaten auf der Basis der Schlüsseldaten (KD) gebildet werden, und daß die Identifikationsdaten (ID) von dem Terminalgerät (30) zu der Host-Maschine (10) zurück übermittelt werden.

5. Verfahren nach Anspruch 1, welches weiterhin den Schritt aufweist, daß die Schlüsseldaten (KD) von einer Host-Maschine (10) zu einem Terminalgerät (30) gesendet werden, daß Identifikationsdaten (ID) an dem Terminalgerät (30) aus den Zufallszahlendaten auf der Basis der Schlüsseldaten (KD) gebildet werden, daß die Identifikationsdaten (ID) zu der Host-Maschine (10) zurückgesendet werden und daß die Identifikationsdaten (ID) an der Host-Maschine (10) in die Daten eingearbeitet werden, die übermittelt werden.

6. Verfahren nach Anspruch 4 oder 5, welches weiterhin den Schritt aufweist, daß die Daten, welche die Anzahl der Wiederholungen des Auslesens der Daten (RD) einer vorbestimmten Anzahl von Bits aus den Zufallszahlendaten betreffen, von der Host-Maschine (10) zu dem Terminalgerät (30) gesendet werden und daß an dem Terminalgerät (30) die Daten (RD) der vorbestimmten Anzahl von Bits aus den Zufallszahlendaten, die in dem Speicher (35) gespeichert sind, um die erwähnte Zahl von Wiederholungen wiederholt ausgelesen werden.

7. Vorrichtung zum Bilden von Identifikationsdaten, wobei die Vorrichtung gekennzeichnet ist durch:
einen Speicher (35), in welchem Zufallszahlendaten vorab gespeichert sind, die aus einer großen Anzahl von Bits gebildet werden,
eine Adreßbildungseinrichtung (43) zum Bilden von Adressen für das Auslesen von Daten (RD) einer vorbestimmten Anzahl von Bits aus dem Speicher (35) auf der Basis von Schlüsseldaten (KD), und
eine Datenausleseeinrichtung (44) zum Übermitteln der Daten (RD) der vorbestimmten Anzahl von Bits, die aus dem Speicher (35) ausgelesen wurden, in die Adreßbildungseinrichtung (43) als zumindest ein Teil neuer Schlüsseldaten (KD), wobei die Identifikationsdaten (ID) aus den Daten (RD) gebildet werden, welche jeweils aus einer vorbestimmten Anzahl von Bits gebildet werden, die von den Zufallszahlendaten ausgelesen wurden.

8. Vorrichtung nach Anspruch 7, wobei die Adreßbildungseinrichtung (43) die Adreßdaten (AD) bildet, indem die Schlüsseldaten (KD) einer irreversiblen Funktionsverarbeitung (42) ausgesetzt werden.

9. Vorrichtung nach Anspruch 7 oder 8, wobei die Datenausleseeinrichtung (44) neue Schlüsseldaten (KD) bildet, indem sie die Daten (RD) der vorbestimmten Anzahl von Bits, welche aus dem Speicher (35) ausgelesen wurden, einer irreversiblen Funktionsverarbeitung (45) aussetzt.

## Revendications

1. Procédé de formation de données d'identification (ID), le procédé étant caractérisé par :
la lecture de données (RD) d'un nombre prescrit de bits à partir de données de nombres aléatoires sur la base de données clefs (KD), lesdites données de nombres aléatoires étant formées d'un grand nombre de bits et préalablement mémorisées dans une mémoire (35) ;
la formation de nouvelles données clefs (KD) dont au moins une partie est formée par lesdites données (RD) d'un nombre prescrit de bits lues à partir des données de nombres aléatoires ;
la lecture de données (RD) d'un nombre prescrit de bits à partir desdites données de nombres aléatoires sur la base desdites nouvelles données clefs (KD), l'opération de lecture étant exécutée de façon répétée ; et,
la formation de données d'identification (ID) à partir desdites données (RD) d'un nombre prescrit de bits lues de manière répétée dans lesdites données de nombres aléatoires.

2. Précédé selon la revendication 1, comprenant en outre la soumission desdites données clefs (KD) au traitement de fonction irréversible (Fa) pour former des données d'adresses (AD) pour lire lesdites données (RD) d'un nombre prescrit de bits à partir de ladite mémoire (35).

3. Procédé selon la revendication 1 ou la revendication 2, comprenant en outre la soumission desdites données (RD) d'un nombre prédéterminé de bits lues à partir de ladite mémoire (35) au traitement de fonction irréversible (Fb) pour former de nouvelles données clefs (KD).

4. Procédé selon la revendication 1, comprenant en outre l'envoi desdites données clefs (KD) à partir d'un ordinateur central (10) à un terminal (30), la formation de données d'identification (ID) au droit dudit terminal (30) à partir desdites données de nombres aléatoires sur la base desdites données clefs (KD), et la retransmission des dites données d'identification (ID) à partir dudit terminal (30) vers ledit ordinateur central (10).

5. Procédé selon la revendication 1, comprenant de plus l'envoi desdites données clefs (KD) à partir d'un ordinateur central (10) à un terminal (30), la formation de données d'identification (ID) au droit dudit terminal (30) à partir desdites données de nombres aléatoires sur la base desdites données clefs (KD), la retransmission desdites données d'identification (ID) audit ordinateur central (10) et l'incorporation desdites données d'identification (ID) au droit dudit ordinateur central (10) dans les données qui sont transmises.

6. Procédé selon la revendication 4 ou la revendication 5, comprenant l'envoi des données concernant le nombre de fois de la répétition de la lecture desdites données (RD) d'un nombre prescrit de bits à partir desdites données de nombres aléatoires, à partir dudit ordinateur central (10) vers ledit terminal (30), et la lecture de façon répétée, ledit nombre de fois de répétition, au droit dudit terminal (30) desdites données (RD) d'un nombre prescrit de bits à partir des données de nombres aléatoires mémorisées dans ladite mémoire (35).

7. Dispositif pour former des données d'identification, le dispositif étant caractérisé par :
une mémoire (35) dans laquelle des données de nombres aléatoires formées d'un grand nombre de bits sont mémorisées préalablement ;
un moyen de formation d'adresses (43) pour former des adresses pour lire des données (RD) d'un nombre prescrit de bits à partir de ladite mémoire (35) sur la base de données clefs (KD) ; et
un moyen de lecture de données (44) pour transmettre lesdites données (RD) d'un nombre prescrit de bits, lues à partir de ladite mémoire (35), audit moyen de formation d'adresses (43) comme au moins une partie de nouvelles données clefs (KD) ;
les données d'identification (ID) étant formées à partir desdites données (RD) formées chacune d'un nombre prescrit de bits, lues à partir desdites données de nombres aléatoires.

8. Dispositif selon la revendication 7, dans lequel ledit moyen de formation d'adresses (43) forme les données d'adresse (AD) en soumettant lesdites données clefs (KD) à un traitement de fonction irréversible (42).

9. Dispositif selon la revendication 7, ou la revendication 8, dans lequel ledit moyen de lecture de données (44) forme les nouvelles données clefs (KD) en soumettant lesdites données (RD) d'un nombre prescrit de bits lues dans ladite mémoire (35) à un traitement de fonction irréversible (45).
